# EUROPEAN PATENT APPLICATION

(11) **EP 3 889 942 A1**
(43) Date of publication of application: **06.10.2021**
(21) Application number: 20167757.2
(22) Date of filing: 02.04.2020
(51) Int. Cl.: G08C 23/02, H04Q 9/00, H05B 47/175, G08G 1/07

(54) **APPARATUS FOR CONTROLLING AN INDEPENDENT ELECTRICAL DEVICE AND METHOD TO CONTROL AN INDEPENDENT ELECTRICAL DEVICE**

(71) Applicant: Securaxis SA, 1253 Vandoeuvres (CH)
(72) Inventor: MELEDER, Glenn, 1206 Genève (CH); VANNAY, Gaetan, 1205 Genève (CH)
(74) Representative: Bird & Bird LLP

(57) **Abstract**

Apparatus for controlling an independent electrical device, wherein said apparatus is configured to receive two or more acoustic signals, to process said acoustic signals, and to provide a control signal based on the processed acoustic signals, wherein said control signal is configured to control directly or indirectly said independent electrical device.

## Description

The present invention relates to an apparatus for controlling an independent electrical device and to a method to control an independent electrical device. The invention is explained with respect to lighting devices arranged along a street or road but the invention can be used advantageously with other electrical devices to be controlled.

The article "An acoustic traffic monitoring system: Design and implementation" explains that vehicle count, lane occupancy, vehicle speed and vehicle type (large vs. small) are derived from signals collected by a microphone array.

US patent 6,825,778 relates to a variable speed limit system. It includes at least two spaced-apart stations. Each station includes a plurality of sensors to gather information relative to at least one of traffic flow and road conditions. The station includes a controller which is programmed to analyse data which is received from the sensors and to derive, therefrom, an optimum speed limit at a selected location adjacent to, or in, the work zone. The station further includes a communication sub-system to communicate data related to the optimum speed limit to a message board to display the optimum speed to motorists.

It is an objective to provide an improved apparatus for controlling an independent electrical device.

The objective is achieved by the apparatus of claim 1 (first aspect) and by the method to control an independent electrical device (second aspect).

The apparatus according to the first aspect is suitable for controlling an independent electrical device. The apparatus configured to receive two or more acoustic signals, to process said acoustic signals, and to provide a control signal based on the processed acoustic signals, wherein said control signal is configured to control directly or indirectly said independent electrical device.

The method to control an independent electrical device (second aspect), preferably using an apparatus according to the first aspect, includes the following steps:
S1 receiving two or more acoustic signal(s), by an apparatus for controlling said independent electrical device, preferably by an apparatus according to one of the preceding claims,
S2 processing said acoustic signal(s), emitted by a mobile body located or travelling with a detection range of said apparatus, preferably into a traffic parameter,
S3 providing a control signal based on the processed acoustic signal(s), wherein the control signal is configured to control directly or indirectly said independent electrical device.

The invention permits to adapt the independent electrical device to the presence of sound emitting objects. This can help to increase safety, save the environment or to save energy. Particularly, if the independent electrical device is a street light or a traffic light and the sound emitting object is a moving vehicle, safety can be increased and energy saved. If the independent electrical device is a traffic light or variable message sign and the sound emitting object is a moving vehicle, safety could be increased, energy saved and the impact on the environment reduced.

While rain, fog, snow or wind may alter the received acoustic signals and need to be considered by the apparatus when processing the acoustic signals, darkness, low light and glaring light do not pose a problem for the apparatus.

### Preferred Embodiments

In the following, preferred embodiments are explained which can be combined with each other advantageously.

In an embodiment, said independent electrical device comprises one or more of a street light, a traffic light, an exterior light and a variable message sign (independent lighting device). The independent electrical device could be an air conditioning device.

Another embodiment of the apparatus is configured to receive said acoustic signals which are emitted by one or more mobile bodies, wherein said mobile body is a vehicle or a human being, preferably located or travelling within a detection range of said apparatus.

A further embodiment comprises two or more acoustic sensors configured to receive said acoustic signals, preferably wherein two of said acoustic sensors are spaced apart from each other. Generally, acoustic sensors are cheaper than cameras. Further, acoustic sensors are not affected by darkness, low light or glaring light.

In another embodiment, the apparatus is configured to process said acoustic signal(s) by using one or more of a time domain generalized phase transform cross-correlation (GCC-PHAT), a Mel-scale fast Fourier transform (MEL FFT), and a neural network. This may help to refine controlling the independent electrical device.

An embodiment is configured to process said acoustic signal(s) into a traffic parameter, wherein said traffic parameter is one or more of a mobile body count, a mobile body velocity, a mobile body velocity vector, a mobile body frequency, a mobile body dimension, a mobile body category, a lane occupancy, the noise level, and a time stamp. The mobile body category indicates whether the mobile body is a car, a motorbike or scooter, a bicycle, a pedestrian, a lorry or truck and its size, a bus, an electric vehicle, a boat, ship or vessel.

The control signal of another embodiment also depends on or includes said traffic parameter, preferably includes an indication of said mobile body count or mobile body velocity.

An embodiment is configured to transmit said control signal wirelessly or through a wired connection to said independent electrical device.

The control signal of an embodiment is configured to cause said independent electrical device to increase or decrease its light emission or energy consumption. This may reduce the cumulated energy consumption.

The control signal of a further embodiment is configured to instruct said independent electrical device, which is a variable message sign, to show a message based on said control signal. The message may be phrased to indicate to the mobile body to change its velocity, to change or to maintain its direction. This could help to reduce the environmental impact of traffic and/or pollution in a particular area.

Another embodiment is configured to receive one or more air quality signals, wherein said air quality signal is indicative of one or more of a gas concentration, a particle concentration, a particle diameter, a CO2-concentration, a NOx-concentration, an O3-concentration, a coarse particulate matter (PM10) concentration, and a fine particulate matter (PM2.5) concentration (pollutants), preferably in a detection range of an air quality sensor of said apparatus. Preferably, the apparatus is arranged to correlate said one or more air quality signals with said acoustic signals. Further, predictive analysis algorithms can be run for information based decision making. This could help to reduce the environmental impact of traffic and/or pollution in a particular area.

A preferred system includes one of the preceding apparatus and said independent electrical device or independent lighting device. The independent lighting device can be arranged near or adjacent to one of a street, a road, a motorway, a crossing, a tunnel, a bike lane, a foot path, a bridge, a ditch, a fence, a waterway or in a building (traffic area). The independent lighting device can comprise two or more independent lighting elements spaced apart from each other, wherein each of the independent lighting elements is one of said street light, traffic light, exterior light and variable message sign. The control signal provided by the apparatus can be configured to control directly or indirectly at least two of said independent electrical elements, preferably such that said at least two independent electrical elements are controlled or instructed differently. This may help to save energy and/or to reduce the environmental impact of traffic and/or pollution in a particular area.

A preferred method also includes the following steps:
S5 processing said one or more of said acoustic signals using time domain generalized phase transform cross-correlation (GCC-PHAT) to obtain filtered audio data,
S6 processing said filtered audio data by a neural network to obtain one or more of a mobile body count and a lane occupancy.

This may help to refine controlling of the independent electrical device.

Another preferred method also includes the following steps:
S7 processing said one or more of said acoustic signals using Mel-scale fast Fourier transform (MEL FFT) to obtain filtered audio data,
S8 processing the filtered audio data by a neural network to obtain one or more of a mobile body category and a time stamp.

This may help to refine controlling of the independent electrical device.

A further preferred method includes
S9 receiving an air quality signal indicative of one or more of a gas concentration, a particle concentration, a particle diameter, a NOx-concentration, a CO2 concentration, a O3 concentration, a coarse particulate matter (PM10) concentration, and a fine particulate matter (PM2.5) concentration, preferably in a detection range of an air quality sensor of the apparatus.
   preferably further comprising
S10 correlating the air quality signal with one or more of the acoustic signals.

Further, predictive analysis algorithms can be run for information based decision making. This may help to save energy and/or to reduce the environmental impact in a particular area.

For a preferred method, said independent electrical device comprises two or more independent electrical elements, wherein said control signal includes an indication of a mobile body velocity vector of said mobile body. The preferred method includes
S11 controlling a first of said independent electrical elements, which is located downstream of said mobile body, to increase its light emission, preferably when a time interval required by the mobile body to pass the first independent electrical element falls below 5s,
   preferably also
S12 controlling a second of said independent electrical elements, which is located downstream of the first independent electrical element, to increase its light emission when a time interval required by the mobile body to pass the second independent electrical element falls below 5s.

This may help to save energy and/or to avoid unnecessary light.

For another preferred method, said independent electrical device comprises two or more independent electrical elements, wherein said control signal includes an indication of a mobile body velocity vector of said mobile body. The preferred method comprises
S13 controlling one of said independent electrical elements, which is located upstream of said mobile body, to decrease its light emission.

This may help to save energy and/or to avoid unnecessary light.

In another preferred method, said independent electrical device comprises a variable message sign arranged downstream of said mobile body. The preferred method includes:
S14 controlling said variable message sign to show a speed limit if the air quality signal indicates an increased NOx concentration or an increased particulate matter concentration.

This may help to save energy and/or to reduce the environmental impact in a particular area.

For a preferred method, said independent electrical device comprises a traffic light arranged downstream of said mobile body. The preferred method comprises:
S15 controlling said traffic light to detour the mobile body if the air quality signal indicates an increased NOx concentration or an increased particulate matter concentration.

This may help to save energy and/or to reduce the environmental impact in a particular area.

### Preferred Applications

It is not necessary that all street lights downstream of a mobile body are switched on simultaneously. It may suffice that a certain stretch ahead of the mobile body is illuminated while the surface behind the mobile body need not be illuminated anymore and the surface beyond the stretch ahead need not be illuminated yet.

One of the above apparatus and methods can process the acoustic signals to indicate the traffic volume (mobile body count/time interval) in a street or road. The control signal indicates the traffic volume to the independent electrical device which is an independent lighting device arranged adjacent to the street or road. With increasing traffic volume, the independent lighting is controlled to increase light emission and/or to indicate a speed limit. With decreasing traffic volume, the independent lighting is controlled to decrease light emission. This may help to save energy and/or to reduce light pollution.

One of the above apparatus and methods can process the acoustic signals to indicate the traffic volume (mobile body count/time interval) in a street or road. The control signal indicates the traffic volume to the independent electrical device which includes three or more street lights spaced apart from each other along a road or street. With increasing traffic volume, more of the street lights are controlled to increase light emission. With decreasing traffic volume, less of the street lights are controlled to increase light emission. This may help to save energy and/or to reduce light pollution.

One o the above apparatus and methods can process the acoustic signals to indicate the velocity vector of a mobile body travelling in the detection range of the apparatus. The control signal indicates the detected mobile body velocity vector to the independent electrical device which includes two street lights spaced apart from each other along a road or street used by the mobile body. With increasing mobile body velocity, the street light further downstream of the mobile body is controlled to increase light emission earlier. With decreasing mobile body velocity, the street light further downstream of the mobile body is controlled to increase light emission later. This may help to save energy and/or to reduce light pollution.

One of the above apparatus and methods can process the acoustic signals to indicate the traffic volume (mobile body count/time interval) and can sense the air quality. Acoustic sensors and the air quality sensor can be arranged near a first street or road. The control signal indicates the traffic volume and the air quality to the independent electrical device which includes a variable message sign. With increasing traffic volume and decreasing air quality, the variable message sign can be controlled to indicate the mobile bodies to slow down or to enter a second street or road branching off the first street or road (diversion 1). This may help to reduce the environmental impact of traffic in the second street or road.

One of the above apparatus and methods can process the acoustic signals to indicate the traffic volume (mobile body count/time interval) and can sense the air quality. Acoustic sensors can be arranged near a first street or road. The air quality sensor can be arranged near a second street or road which branches off the first road. The control signal indicates the traffic volume and the air quality to the independent electrical device which includes a variable message sign. With increasing traffic volume and decreasing air quality, the variable message sign can be controlled to indicate the mobile bodies in the first street or road not to enter the second street or road (diversion 2). This may help to reduce the environmental impact of traffic in the second street or road.

One of the above apparatus and methods can process the acoustic signals into a noise level caused by mobile bodies travelling in the range of detection of two or more acoustic sensors arranged near or along a street or road. The control signal indicates the noise level to the independent electrical device which includes a variable message sign. The variable message sign can be controlled to indicate a first speed limit if the noise level exceeds a first noise level limit. The variable message sign can be controlled to indicate a second speed limit smaller than the first speed limit if the noise level exceeds a second noise level limit greater than the first noise level limit. This may help to reduce the environmental impact of traffic in the street or road.

One of the above apparatus and methods can process the acoustic signals into a noise level caused by people in a room or hall. A greater noise level can indicate that more people are in the room. The control signal indicates the noise level to the independent electrical device which includes an air conditioning device. The air conditioning device can be controlled to increase its energy consumption at greater noise levels. This can help to save energy, to control the level of CO2 in the room or hall and/or to increase the comfort of the people in the room or hall.

One of the above apparatus and methods can process the acoustic signals sensed by two or more acoustic sensors arranged near or along a fence, a bridge, a footpath, a slope, stairs, a tunnel, a waterway or in an area deemed to be dangerous for a human being, a pedestrian or cyclist, which are mobile bodies. The acoustic signals can be processed to indicate the presence of a mobile body (mobile body count = 1) or the mobile body count in the detection range of the acoustic sensors. A control signal can indicate the presence of a mobile body (mobile body count = 1) or the mobile body count to the independent lighting device arranged near or spaced apart from the acoustic sensors. The independent lighting device can be controlled to increase light emission if a person is travelling in the detection range of the acoustic sensors, to increase light emission with increasing mobile body count or to indicate the human being(s) a warning message. This can help to save energy and/or to increase the safety of the human being(s).

One of the above apparatus and methods can process the acoustic signals to indicate the mobile body category of one or more mobile bodies. Two or more acoustic sensors can be arranged near or along a street or road. The apparatus can employ a sound library when processing the acoustic signals. The independent electrical can include a variable message sign, which can be controlled to indicate to slow down, stop or divert a combustion engine type vehicle, to indicate to slow down, stop or divert a vehicle of a minimum weight or size, to indicate to proceed with an electric vehicle. This can help to reduce noise and/or environmental impact.

One of the above apparatus and methods can process the acoustic signals to indicate the presence (mobile body count = 1) or size of a mobile body which can be a boat, ship or vessel. Acoustic sensors can be arranged near a bridge, a lock or an obstacle to navigation. The independent electrical device can include an external light, and/or a variable message sign. Depending on the presence or size of the boat, ship or vessel, the external light can be controlled to increase its light emission. Depending on the presence or size of the boat, ship or vessel, the variable message sign can be controlled to indicate an information about the obstacle, a speed limit, a signal to halt or a warning.

### Exemplary embodiments

Further advantages of the invention become apparent from the following exemplary embodiments.

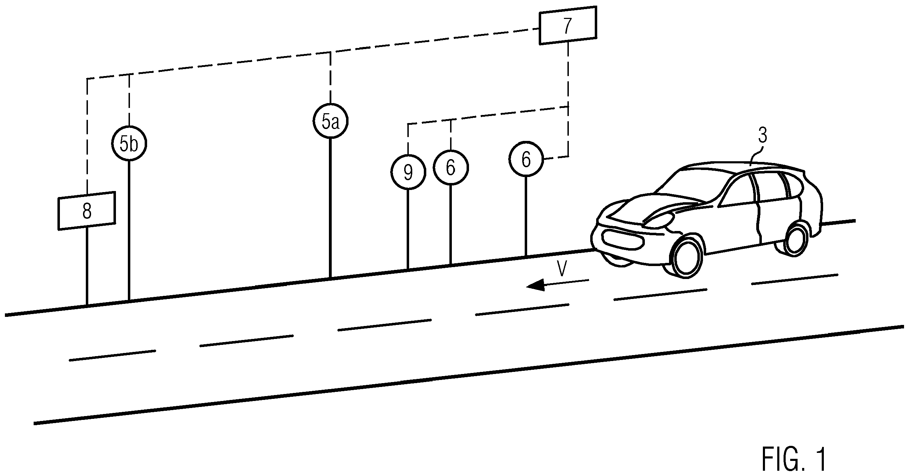

Figure 1 shows a first exemplary embodiment of the apparatus. A vehicle 3 is travelling along a street or road. The apparatus includes an electronic control unit 7 and two acoustic sensors 5 spaced apart from each other along the street or road. The apparatus is also connected (dashed lines) two an independent electrical device including two street lights 6a, 6b and a variable message sign 8. The apparatus can process that the acoustic signals to obtain a traffic parameter, particularly one or more of mobile body count, noise level, and the velocity vector of the respective mobile body traveling within the detection range of the acoustic sensors.
   The control signal provided by the apparatus to the independent electrical device can control the street lights to increase light emission, when at least one mobile body is detected (mobile body count = 1). With increasing mobile body count, the street lights can be controlled to emit even more light. With increasing mobile body velocity, the light emission of street lights ahead of the mobile body need to be ramped up earlier. With increasing mobile body velocity, the light emission of street light 6a can be reduced earlier.
   The independent electrical device further comprises a variable message sign 8. The control signal provided by the apparatus to the independent electrical device can control the variable message sign to indicate the driver to slow down the vehicle if a noise level limit or a mobile body count is exceeded. The variable message sign can be controlled to indicate the driver to slow down, stop or divert the vehicle if an air quality signal falls into an undesirable range.

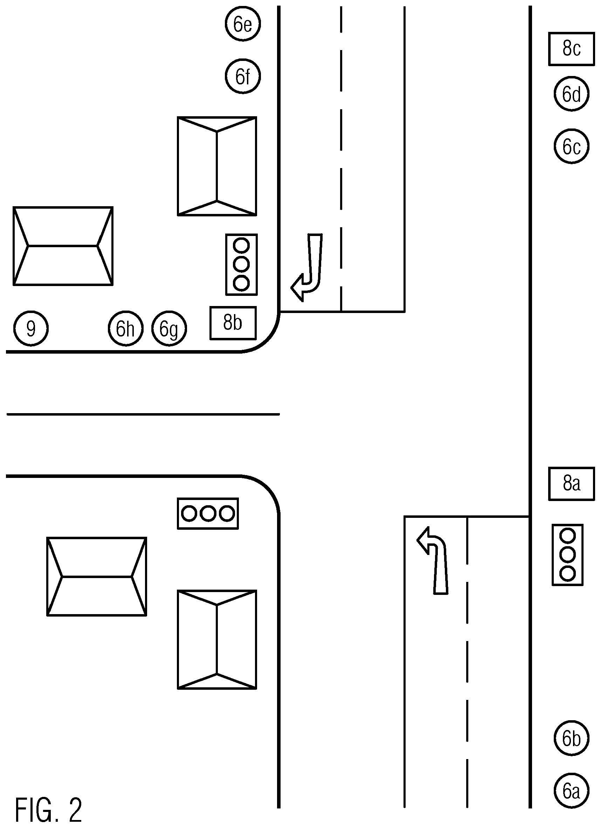

Figure 2 shows a second exemplary embodiment of the apparatus, which is arranged along the first street and a second street branching off the first street. The apparatus comprises acoustic sensors 6a-6h and an air quality sensor 9. The independent electrical devices several traffic lights and variable message signs 8a-8c.
   The signals of acoustic sensors 6a, 6b, 6e, 6f can be processed to provide mobile body counts and/or lane occupancy. If the signal from air quality sensor 9 indicates low air quality in the second street, variable message signs 8a, 8b can be controlled to indicate the drivers of vehicles having a combustion engine and intending to enter the second street (lane occupancy) not to do so.
   The signals of acoustic sensors 6g, 6h can be processed to provide a noise level. If the noise level exceeds a noise level limit then variable message signs 8a, 8b can be controlled to indicate drivers of vehicles of a least size or weight and intending to enter the second street (lane occupancy using acoustic sensors 6a, 6b, 6e, 6g)) not to do so. If the noise level exceeds a noise level limit, then variable message signs 8a, 8b can be controlled to indicate that electric vehicles may enter the second street.
   The signals of acoustic sensors 6c, 6d can be processed to provide a noise level, mobile body count and/or mobile body velocity. If one of these traffic parameters exceeds a limit, then variable message sign 8c can be controlled to indicate the speed limit.

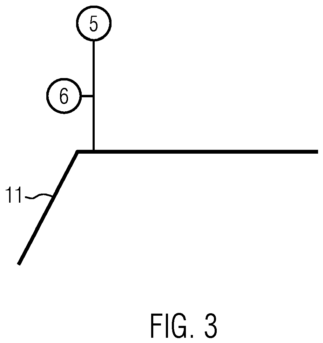

Figure 3 shows another exemplary embodiment. Acoustic sensors 6 are arranged near a slope or stairs 11 which may pose a threat to a pedestrian. If external light 5 was switched on all the time, energy could be wasted. The acoustic signals can be processed to indicate presence (mobile body count =1) and the velocity vector of the pedestrian. The control signal includes at least the velocity vector. If the velocity vector indicated that the pedestrian approaches the slope or stairs, the external light 5 could be controlled to increase light emission.
   The acoustic signals can be processed to also indicate a decreasing distance from the slope or stairs, quite similar to lane occupancy. The external light five can be controlled to increase light emission even further with decreasing distance from the slope or stairs.

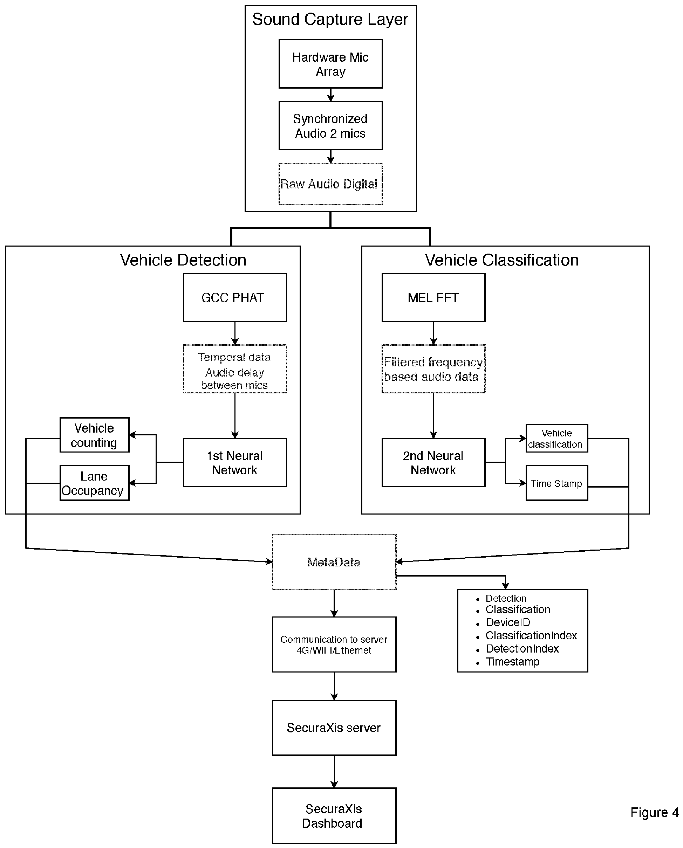

Figure 4 shows audio signal processing in an exemplary apparatus. Raw audio data or acoustic signals from acoustic sensors is processed into vehicle detection using a GCC-PHAT algorithm. The temporal data audio delay between the microphones is obtained. The audio data is fed to a first neural network which provides vehicle count and lane occupancy. The raw audio data it is also processed using a MEL FFT algorithm for vehicle classification. Filtered frequency based audio data is provided to a second neural network which results in vehicle classification and the respective time stamp. Vehicle count, lane occupancy, vehicle classification and time stamp (meta data) are used for detection, classification, device ID, classification index, detection index and time stamp.

### Reference signs

- 1: apparatus
- 2: independent electrical device
- 3: mobile body
- 4: traffic area
- 5: external light, street light
- 6: acoustic sensor
- 7: electronic control unit of apparatus
- 8: variable message sign
- 9: air quality sensor
- 10: traffic light
- 11: slope, stairs
- v: velocity of mobile body

## Claims

1. Apparatus for controlling an independent electrical device, wherein said apparatus is configured to receive two or more acoustic signals, to process said acoustic signals, and to provide a control signal based on the processed acoustic signals, wherein said control signal is configured to control directly or indirectly said independent electrical device.

2. Apparatus according to claim 1, wherein said independent electrical device comprises one or more of a street light, a traffic light, an exterior light and a variable message sign (independent lighting device).

3. Apparatus according to one of the preceding claims, wherein said apparatus is configured to receive said acoustic signals which are emitted by one or more mobile bodies, wherein said mobile body is one of a vehicle and a human being, preferably located or travelling within a detection range of said apparatus.

4. Apparatus according to one of the preceding claims, wherein said apparatus comprises two or more acoustic sensors configured to receive said acoustic signals, preferably wherein two of said acoustic sensors are spaced apart from each other.

5. Apparatus according to one of the preceding claims, wherein said apparatus is configured to process said acoustic signal(s) by using one or more of a time domain generalized phase transform cross-correlation (GCC-PHAT), a Mel-scale fast Fourier transform (MEL FFT), and a neural network.

6. Apparatus according to one of the preceding claims, wherein said apparatus is configured to process said acoustic signal(s) into a traffic parameter, wherein said traffic parameter is one or more of a mobile body count, a mobile body velocity, a mobile body velocity vector, a mobile body frequency, a mobile body dimension, a mobile body category, a lane occupancy, a noise level, and a time stamp.

7. Apparatus according to one of the preceding claims, wherein said control signal also depends on or includes said traffic parameter, preferably includes an indication of said mobile body velocity.

8. Apparatus according to one of the preceding claims, wherein said apparatus is configured to transmit said control signal wirelessly or through a wired connection to said independent electrical device.

9. Apparatus according to one of the preceding claims, wherein said control signal is configured to cause said independent electrical device to increase or decrease its light emission or energy consumption.

10. Apparatus according to one of the preceding claims, wherein said control signal is configured to instruct said independent electrical device, which is a variable message sign, to show a message based on said control signal.

11. Apparatus according to one of the preceding claims, wherein said apparatus is configured to receive one or more air quality signals, wherein said air quality signal is indicative of one or more of a gas concentration, a particle concentration, a particle diameter, a NOx-concentration, a CO2 concentration, a O3 concentration, a coarse particulate matter (PM10) concentration, and a fine particulate matter (PM2.5) concentration, preferably in a detection range of an air quality sensor of said apparatus.

12. Apparatus according to claim 11, wherein said apparatus is configured to correlate said one or more air quality signals with said acoustic signals.

13. System comprising an apparatus according to one of the preceding claims and said independent electrical device or independent lighting device.

14. System according to claim 13, wherein said independent lighting device is positioned near or adjacent to one of a street, a road, a motorway, a crossing, a tunnel, a bike lane, a foot path, a bridge, a ditch, a fence, a waterway or in a building.

15. System according to one of claims 13 and 14, wherein said independent lighting device comprises two or more independent lighting elements spaced apart from each other, wherein each of the independent lighting elements is one of said street light, traffic light, exterior light and variable message sign.

16. System according to claim 15 wherein said control signal is configured to control directly or indirectly at least two of said independent electrical elements, preferably such that said at least two independent electrical elements are controlled or instructed differently.

17. Method to control an independent electrical device, preferably using an apparatus according to one of the preceding claims, the method including the following steps:
S1 receiving two or more acoustic signal(s), by an apparatus for controlling said independent electrical device, preferably by an apparatus according to one of the preceding claims,
S2 processing said acoustic signal(s), emitted by a mobile body located or travelling with a detection range of said apparatus, preferably into a traffic parameter,
S3 providing a control signal based on the processed acoustic signal(s), wherein the control signal is configured to control directly or indirectly said independent electrical device.

18. Method according to claim 17, comprising
S5 processing said one or more of said acoustic signals using time domain generalized phase transform cross-correlation (GCC-PHAT) to obtain filtered audio data,
S6 processing said filtered audio data by a neural network to obtain one or more of a mobile body count and a lane occupancy.

19. Method according to one of claims 17 to 18, comprising
S7 processing said one or more of said acoustic signals using Mel-scale fast Fourier transform (MEL FFT) to obtain filtered audio data,
S8 processing the filtered audio data by a neural network to obtain one or more of a mobile body category and a time stamp.

20. Method according to one of claims 17 to 19, comprising
S9 receiving an air quality signal indicative of one or more of a gas concentration, a particle concentration, a particle diameter, a NOx-concentration, a CO2 concentration, a O3 concentration, a coarse particulate matter (PM10) concentration, and a fine particulate matter (PM2.5) concentration, preferably in a detection range of an air quality sensor of the apparatus.
preferably further comprising
S10 correlating the air quality signal with one or more of the acoustic signals.

21. Method according to one of claims 17 to 20, wherein said independent electrical device comprises two or more independent electrical elements, wherein said control signal includes an indication of a mobile body velocity vector of said mobile body, the method comprising
S11 controlling a first of said independent electrical elements, which is located downstream of said mobile body, to increase its light emission, preferably when a time interval required by the mobile body to pass the first independent electrical element falls below 5s.

22. Method according to claim 21, including step
S12 controlling a second of said independent electrical elements, which is located downstream of the first independent electrical element, to increase its light emission when a time interval required by the mobile body to pass the second independent electrical element falls below 5s.

23. Method according to one of claims 17 to 22, wherein said independent electrical device comprises two or more independent electrical elements, wherein said control signal includes an indication of a mobile body velocity vector of said mobile body, the method comprising
S13 controlling one of said independent electrical elements, which is located upstream of said mobile body, to decrease its light emission.

24. Method according to one of claims 20 to 23, wherein said independent electrical device comprises a variable message sign arranged downstream of said mobile body, including
S14 controlling said variable message sign to show a speed limit if the air quality signal indicates an increased NOx concentration or an increased particulate matter concentration.

25. Method according to one of claims 20 to 24, wherein said independent electrical device comprises a traffic light arranged downstream of said mobile body, including
S15 controlling said traffic light to detour the mobile body if the air quality signal indicates an increased NOx concentration or an increased particulate matter concentration.
